# EUROPEAN PATENT APPLICATION

(11) **EP 3 795 895 A1**
(43) Date of publication of application: **24.03.2021**
(21) Application number: 19198783.3
(22) Date of filing: 20.09.2019
(51) Int. Cl.: F21V 8/00, F21Y 105/00, F21Y 115/10

(54) **MODULAR LIGHT EXTRACTION UNIT FOR PRODUCING UNIFORM LUMINANCE**

(71) Applicant: ewo GmbH, 39040 Kurtatsch (BZ) (IT)
(72) Inventor: Rützel, Stefan, 39040 Kurtatsch (BZ) (IT); Tuchscherer, Philip, 39040 Kurtatsch (BZ) (IT); Kessler, Moritz, 39040 Kurtatsch (BZ) (IT); Wohlgemuth, Hannes, 39040 Kurtatsch (BZ) (IT); Wohlgemuth, Ernst, 39040 Kurtatsch (BZ) (IT)
(74) Representative: Herre, Peter

(57) **Abstract**

The present invention relates to a light extraction unit for a lighting module, comprising a light entry surface defined by a side surface of the light extraction unit, a light exit surface arranged along a longitudinal direction of the light extraction unit between the light entry surface and a distal end of the light extraction unit, wherein a section of the light extraction unit at the distal end defines an end section, and wherein the light extraction unit is configured to distribute light received from the light entry surface over the light exit surface, and a notch area arranged between an edge of the light exit surface and an edge of the light entry surface, wherein the end section is adapted to cover the notch area of another light extraction unit when the light exit surface of the other light extraction unit extends along the light exit surface. The invention further relates to a lighting module comprising the light extraction unit and to an array of lighting modules comprising at least two lighting modules.

## Description

### FIELD OF THE INVENTION

The present invention relates to lighting systems, particularly to light extraction units and their arrangement in lighting modules and arrays thereof.

### BACKGROUND OF THE INVENTION

Lighting systems often aim at providing a uniform luminance at the light emitting surface with a directed light distribution to illuminate large areas.

WO 2018/157903 A1 discloses a large area lighting system in which a light guide having a front face and a back face is configured for guiding light received at a lateral face by total internal reflection between the front face and the back face. The front face comprises a regular pattern of small regions for having light pass there through. A collimation unit is placed on top of the front face to emit collimated light at the output side.

Large area lighting systems of such a type either cause individual manufacturing of the required size of the luminous area or will encounter limitations when concatenating multiple lighting systems to larger areas, as the side-lit approach does not allow to concatenate multiple light sources at least on the lateral side where the light source couples light into the light guide.

Other lighting systems provide a modular design to ease assembly of large luminous areas by arranging a plurality of tile lights along two dimensions to the required size of the luminous area.

EP 3 002 512 A1 discloses a tile light system in which a plurality of light emitting elements are arranged along the edges of a tile to light towards the center of the tile.

Uniformity of the illumination is improved by particularly shaping the reflective interior of the tile.

The tile light system of such a type suffers from uniformity of the luminance especially at the edges of the tile right behind the position of the light sources.

### OBJECTS AND SUMMARY OF THE INVENTION

It would be desirable to provide a lighting module that can be arranged in a two-dimensional array of lighting modules that maintains a high degree of uniform luminance over the entire array without limitations especially at the edges of each lighting module.

According to a first aspect of the invention, a light extraction unit is provided for a lighting module, comprising a light entry surface defined by a side surface of the light extraction unit, a light exit surface arranged along a longitudinal direction of the light extraction unit between the light entry surface and a distal end of the light extraction unit, wherein a section of the light extraction unit at the distal end defines an end section, and wherein the light extraction unit is configured to distribute light received from the light entry surface over the light exit surface, and a notch area arranged between an edge of the light exit surface and an edge of the light entry surface, wherein the end section is adapted to cover the notch area of another light extraction unit when the light exit surface of the other light extraction unit extends along the light exit surface. The invention further relates to a lighting module comprising the light extraction unit and to an array of lighting modules comprising at least two lighting modules.

As used herein, "substantially flat" means formed initially in a single plane and not wrapped around or conformed to fit a non-planar shape.

In some embodiments, the light exit surface is substantially flat. Preferably, the light exit surface has a grooved profile. At least some of the grooves may have a cylindrical shape. More preferably, a substantially flat light exit surface has a cylindrical grooved profile.

Preferably, the notch area is arranged such that a cross-sectional area of the light extraction unit at the edge of the light entry surface is smaller than a cross-sectional area of the light extraction unit at the edge of the light exit surface.

In some embodiments, the notch area is a counterpart of an end section of an adjacent light extraction unit that matches the end section in form and size. In other embodiments, the notch area provides a free space larger than the end section, wherein the distal end of the adjacent light extraction unit contacts or almost contacts the edge of the light extraction unit between its light exit surface and its notch area.

In some embodiments, the notch area causes a shape of the light extraction unit so that a portion of another light extraction unit, preferably the end section, contacts the light extraction unit at least at a portion of the notch area, while the light exit surfaces of both light extraction units are arranged to appear as one combined surface.

In a preferred embodiment of the invention, the notch area is configured to receive a cover part, and wherein the cover part is adapted such that an edge of a cover surface of the cover part contacts the edge between the light exit surface and the notch area, and the cover surface extends along the light exit surface.

In a preferred embodiment of the invention, the light extraction unit comprises a back surface opposite to the light exit surface. At least a part of the back surface may comprise a reflector to reflect the light towards the light exit surface.

In some embodiments, the light extraction unit comprises means for mounting the light extraction unit that are arranged at the back surface in order to provide a light exit surface without a mounting frame that would limit a cascading of light extraction units.

Preferably, the distance between the back surface and the light exit surface decreases from the light entry surface to the distal end of the light extraction unit.

In a preferred embodiment of the invention, the back surface includes a first light-guiding and light-extracting structure comprising a first plurality of freeform units juxtaposed along a longitudinal direction of the light extraction unit.

Each of the first plurality of freeform units may be configured to receive light at an angle of incidence equal to or larger than the corresponding critical angle for total internal reflection at the back surface such that substantially the entire received light is totally reflected, a predefined portion of the totally reflected light impinging under an angle of incidence smaller than the corresponding critical angle for total internal reflection at the light exit surface is extracted through the light exit surface, and the remaining portion of the totally reflected light impinging under an angle of incidence equal to or larger than the corresponding critical angle for total internal reflection at the light exit surface is guided to another freeform unit of the first plurality of freeform units towards the distal end of the light extraction unit.

The light-guiding and light-extracting structure may have a repetitive pattern of freeform units arranged along a longitudinal direction of the light extraction unit. The freeform units may be configured to direct a predefined portion of the received light towards the light exit surface within a predefined range of exit angles to maintain a particular degree of directionality of the light.

In some embodiments, the light-guiding and light-extracting structure has a repetitive pattern of freeform units of a same or similar type whose grid points vary independently of each other as a function of the direction from the light entrance surface of the light extraction unit to the distal end of the light extraction unit. The variation may be chosen such that the freeform units are scaled and positioned by a spline function or polynomial function.

The spline function may be defined by a predetermined number of grid points in two dimensions, preferably 3 to 15 grid points, more preferably 10 grid points. The polynomial function may be of second order.

In some embodiments, at least some of the first plurality of freeform units have a shape that causes reduction of the distance between the back surface and the light exit surface towards the distal end of the light extraction unit.

In some embodiments, at least some of the first plurality of freeform units have one highest point representing the smallest distance between the back surface and the light exit surface within the respective freeform unit. In an embodiment, the highest point of each freeform unit is closer to the light exit surface the closer the particular freeform unit is to the distal end of the light extraction unit.

In an embodiment, the absolute value of the slope of a reflecting surface of a freeform unit on the side of the light entry surface to the highest point is smaller than the absolute value of the slope of the reflecting surface of this freeform unit from the highest point towards the distal end. In an embodiment, the decrease of distance between the back surface and the light exit surface within a freeform unit to the highest point from the side of the light entry surface is greater than the increase of distance between the back surface and the light exit surface within this freeform unit after the highest point towards the distal end.

In a preferred embodiment of the invention, the light exit surface includes a second light-guiding and light-extracting structure comprising a second plurality of freeform units juxtaposed along a longitudinal direction of the light extraction unit.

Each of the second plurality of freeform units may be configured to receive light at an angle of incidence smaller than the corresponding critical angle for total internal reflection at the light exit surface such that a predefined portion of the received light is extracted through the light exit surface, the remaining portion of the reflected light impinges under an angle of incidence equal to or larger than the corresponding critical angle for total internal reflection at the back surface and is further guided by total internal reflection to another freeform unit of the second plurality of freeform units towards the distal end of the light extraction unit.

Preferably, at least one of the first and second pluralities of freeform units are configured to extract light through the light exit surface according to a predefined angular distribution at the light exit surface.

At least some of the first and/or second pluralities of freeform units may be configured to extract substantially the same amount of light through the light exit surface.

Preferably, each of the first pluralities of freeform units and/or each of the second pluralities of freeform units are configured to extract substantially the same amount of light through the light exit surface, thereby causing a homogenous extraction of light along the light exit surface.

According to a second aspect of the invention, there is provided a lighting module comprising the light extraction unit according to the first aspect of the invention, and a light guide unit with a light entry surface and a light exit surface, the light guide unit configured to guide light received from a light source at the light entry surface of the light guide unit to the light exit surface of the light guide unit, wherein the light exit surface of the light guide unit is coupled to the light entry surface of the light extraction unit.

The gist of the present invention is that the light source and/or the light guide unit is hidden behind the light extraction unit of another lighting module so that a large luminous area can be created by concatenating a plurality of lighting modules. This setup ensures uniform luminance across all light exit surfaces. The purpose of the light guide unit is to arrange the light source required for injecting light into the light extraction unit at a position that eases assembly of the lighting module.

In some embodiments, the light source is mounted such that light is emitted from a direction that is approximately parallel to the normal of the light extraction surface of the light extraction unit.

In a setup for installation within a luminaire body, the light source is directly or indirectly mounted on the luminaire body and the light guide directs the light around a corner to reach the light entry surface of the light extraction unit on its side.

In a preferred embodiment of the invention, the light guide unit and the light source are arranged such that there is no direct line of view from the position of light extraction at the light exit surface of the light extraction unit to the position of light entrance at the light entry surface of the light guide unit.

The light source may comprise a longitudinal array of light emitters or a single linear light emitter that matches the width of the light extraction unit. Preferably, a light-emitting surface of the light source matches the light entry surface of the light guide unit. In some embodiments, the light guide is of a curved cuboid shape, preferably with a constant bend radius. Light of the light source enters the light guide unit at an end face of the curved cuboid denoted as light entry surface. The light guide unit is configured for guiding the light towards another end face of the curved cuboid where the light exits the light guide unit at a light exit surface that is coupled to the light entry surface of the light extraction unit.

According to a third aspect of the invention, there is provided an array of lighting modules comprising a first and a second lighting module according to the second aspect of the invention, wherein the notch area of the first lighting module is configured to receive the end section of the second lighting module, and wherein the end section of the second lighting module is configured to cover the notch area of the first lighting module such that an edge of the light exit surface at the distal end of the light extraction unit of the second lighting module contacts or almost contacts the edge between the light exit surface and the notch area of the first lighting module, and the light exit surface of the second lighting module extends along the light exit surface of the first lighting module.

### BRIEF DESCRIPTION OF THE DRAWINGS

Further features, objects and advantages of the invention will become apparent from the following detailed description taken in conjunction with the accompanying schematic drawings, in which:
Fig. 1 shows a cross-sectional view of a light extraction unit according to an embodiment of the invention,
Fig. 2 shows an enlarged schematic cross-sectional view of a freeform unit and its longitudinal arrangement building a back surface of a light extraction unit according to an embodiment of the invention,
Fig. 3 shows a cross-sectional view of a light guide unit according to an embodiment of the invention,
Fig. 4A shows a cross-sectional view of a lighting module according to an embodiment of the invention, in which another lighting module covers the light guide unit,
Fig. 4B shows a cross-sectional view of a lighting module according to an embodiment of the invention, in which a cover part covers the light guide unit,
Fig. 5 shows a perspective view of a lighting module according to an embodiment of the invention,
Fig. 6 shows a perspective view of an array of lighting modules according to an embodiment of the invention.

### DETAILED DESCRIPTION OF EXEMPLARY EMBODIMENTS OF THE INVENTION

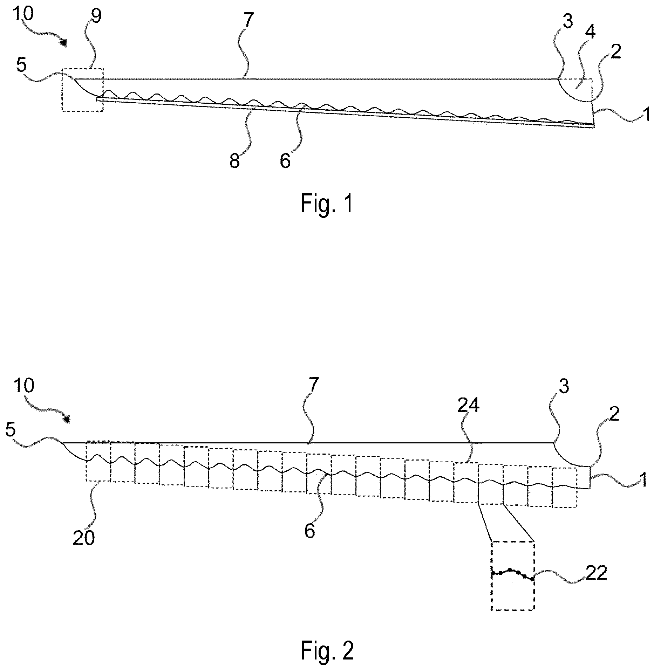

Fig. 1 shows an essentially wedge-shaped light extraction unit 10 having a planar light exit surface 7. Light exit surface 7 may have an essentially rectangular form in which the width of the light exit surface 7 is perpendicular to the shown cross-sectional view. The thickness of the light extraction unit 10 is decreasing between two opposing edges of the light exit surface 7. A side surface of the light extraction unit 10 at its thicker side acts as light entry surface 1 for injecting light into the light extraction unit 10. The light extraction unit 10 has a back surface 6 opposite to the light exit surface 7. The back surface 6 meets the light exit surface 7 in edge 5 at the thinner side of the essentially wedge-shaped light extraction unit 10. The back surface 6 has a structure which acts as a reflecting surface and may be covered by an optical reflector and/or diffuser 8.

An end section 9 is defined by a portion of the light extraction unit 10 that is located around edge 5 of the light extraction unit 10 opposite to the light entry surface 1. Edge 5 represents the distal end of light extraction unit 10.

The light extraction unit 10 has a notch that separates the light exit surface 7 from the light entry surface 1. A notch area 4 represents the free space between an edge 2 along the light entry surface 1 and an edge 3 along the light exit surface 7. The notch may be formed by cutting off an edge at the thicker side of the wedge-shaped light extraction unit 10 where the light exit surface 7 adjoins the light entry surface 1 along this edge.

The purpose of the notch area 10 is to receive an end section 9a of another light extraction unit 10a to concatenate the light exit surfaces 7, 7a of a plurality of light extraction units 10, 10a. Alternatively, notch area 4 may be covered by a cover part 30 for the first lighting module in length direction as this is not covered by another light module.

Fig. 2 shows a light extraction unit 10 having a back surface 6 with a light-guiding and light-extracting structure. The structure has a pattern of freeform units 22 along a longitudinal direction of the light extraction unit 10. Freeform unit 22 is configured to extract a predefined portion of the received light towards the light exit surface 7 within a predefined range of exit angles to maintain a particular degree of directionality of the light. The remaining light is passed to one or more of the following freeform unit

22 towards the distal end 5. The freeform units 22 have a shape that reduces the overall distance between the back surface 6 and the light exit surface 7 towards the end section 9 which is visualized by the steps shown between the block markers around each of the plurality 20 of freeform units 22. Each of the freeform units 22 has one highest point that has the smallest distance between the back surface 6 and the light exit surface 7 within the respective freeform unit 22. The absolute value of the slope of the freeform unit 22 on the side of the light entry surface 1 to the highest point is smaller than the absolute value of the slope of the freeform unit 22 from the highest point towards the end section 9. Due to the overall decrease of distance of the back surface 6 to the light exit surface 7 in longitudinal direction of the light extraction unit 10 towards the distal end 5, the absolute decrease before the highest point is greater than the absolute increase after the highest point. This particular pattern is advantageous, as it provides a uniform and directional light distribution as well as a higher optical efficiency.

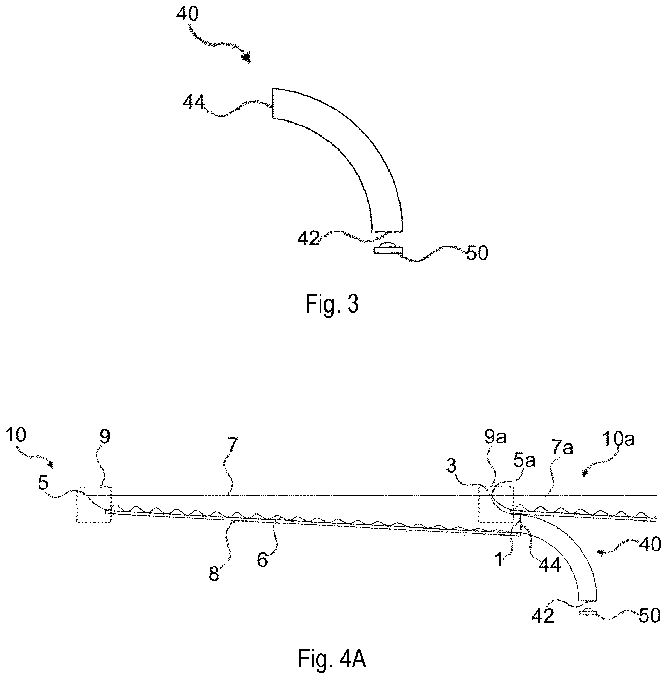

Fig. 3 shows a cross-sectional view of a light guide unit 40 which may be used in conjunction with the light extraction unit 10. The purpose of the light guide unit 40 is to position a light source 50 at a location and alignment that eases an assembly of lighting modules 60, 62, 64, 70, 72, 74. Light guide unit 40 allows to position and align the light source 50 such that there is no direct line of view from any point of the light exit surface 7 to the light source, facilitating hiding the light guide unit 10 and the light source 50 from being viewed by adding an additional lighting module 62 or an optional cover part 30. Furthermore, light guide unit 40 improves the uniformity of the light extracted by the light extraction unit 10 which is essentially defined by the light extraction unit 10 and not by a particular position of the light source 50. The light guide unit 40 has the shape of a curved cuboid, preferably with a constant bend radius. Light of the light source 50 enters the light guide unit 40 at an end face of the curved cuboid denoted as light entry surface 42. The surface of the light guide unit 40 is configured for guiding the light towards another end face of the curved cuboid where the light exits the light guide unit 40 at a light exit surface 44.

Fig. 4A shows a lighting module 62 with a light extraction unit 10 and a light guide unit 40. The light guide unit 40 is illuminated by light source 50 which is arranged at the light entry surface 42 of the light guide unit 40. Light source 50 comprises a longitudinal array of lighting elements that are or a single linear lighting element that is arranged along the width of the light extraction unit 10 (not shown due to the cross-sectional view). Light entry surface 1 of the light extraction unit 10 is coupled to light exit surface 44 of the light guide unit 40.

The light exit surface 7 of lighting module 62 is extended by light exit surface 7a of another lighting module 60 that hides the light guide unit 10 from views. Form and size of the notch area 4 is adapted to receive an end section 9a of another lighting module 62. The distal end 5a of the light exit surface 7a of the other lighting module 60 contacts or almost contacts the edge 3 of the notch area 4 of the lighting module 62 so that the light exit surfaces 7, 7a of the lighting modules 62, 60 appear or almost appear as one common luminous area.

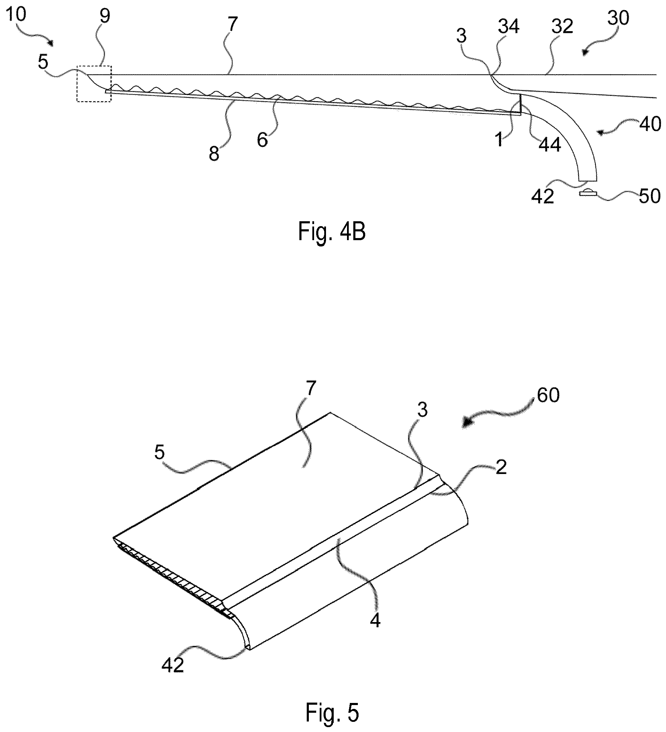

Fig. 4B shows a lighting module 60 with a light extraction unit 10 and a light guide unit 40. The light guide unit 40 is illuminated by light source 50 which is arranged at the light entry surface 42 of the light guide unit 40. Light source 50 comprises a longitudinal array of lighting elements that are or a single linear lighting element that is arranged along the width of the light extraction unit 10 (not shown due to the cross-sectional view). Light entry surface 1 of the light extraction unit 10 is coupled to light exit surface 44 of the light guide unit 40.

The lighting module 60 is placed at the border of the desired luminous area so that there is no other lighting module arranged for extending the size of the light exit surface 7 with another light exit surface 7a as shown in Fig. 4A. Instead, a cover part 30 is provided with a cover surface 32 that extends along the light exit surface 7, thereby hiding light guide unit 10 and the light source 50 from being viewed. Fig. 5 shows a lighting module 60 comprising a light extraction unit 10 and a light guide unit 40 in perspective view. The lighting module 60 is integrally formed and allows illumination along an end face that limits a curved section of the light guide unit 40 and acts as the light entry surface 42.

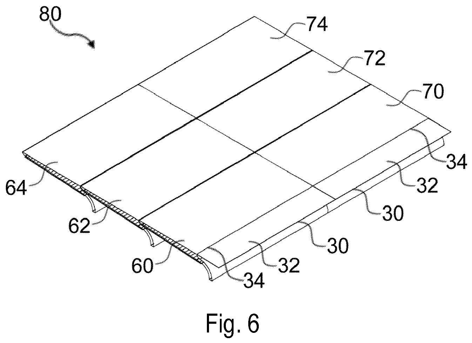

Fig. 6 shows an array 80 of six lighting modules in which three lighting modules 60, 62, 64 combine the luminous area in a length dimension and in which further three lighting modules 70, 72 ,74 enlarge the luminous area in a width direction. The light guide units 40 of those lighting modules 60, 70 which are not covered by the end section 9, 9a of an adjacent lighting module are each hidden by a cover part 30 such that a planar cover surface 32 of the cover part 30 extends along the planar light exit surface 7 of the respective lighting modules 60, 70.

Incidentally, the invention includes all the components mentioned in the exemplary embodiments which are required for the realization of a light extraction unit and a light guide unit that form together a lighting module. The distribution between the individual components of the lighting module described in the preceding exemplary embodiments is to be understood as an example. There are also other divisions between the components of the lighting module conceivable that realize the described features of the invention in an equivalent form.

In some embodiments, notch area 4 may be part of light guide unit 40 instead of light extraction unit 10 so that light entry surface 1 of light extraction unit 10 is arranged along edge 3 of the light extraction unit 10, whereas edge 2 forms part of light guide unit 40.

The details contained in the above description of embodiments should not be construed as limiting the scope of the invention but rather represent an exemplification of some of its embodiments. Many variants are possible and immediately apparent to the skilled person. In particular, this relates to variations comprising a combination of features of the individual embodiments disclosed in the present specification. Therefore, the scope of the invention should be determined not by the illustrated embodiments, but by the appended claims and their legal equivalents.

## Claims

1. A light extraction unit (10) for a lighting module (60), comprising:
a light entry surface (1) defined by a side surface of the light extraction unit (10);
a light exit surface (7) arranged along a longitudinal direction of the light extraction unit (10) between the light entry surface (1) and a distal end of the light extraction unit (10), wherein a section of the light extraction unit (10) at the distal end defines an end section (9), and wherein the light extraction unit (10) is configured to distribute light received from the light entry surface (1) over the light exit surface (7); and
a notch area (4) arranged between an edge (3) of the light exit surface (7) and an edge (2) of the light entry surface (1), wherein the end section (9) is adapted to cover the notch area (4a) of another light extraction unit (10a) when the light exit surface (7a) of the other light extraction unit (10a) extends along the light exit surface (7) of the light extraction unit (10).

2. The light extraction unit (10) of claim 1, wherein the notch area (4) is arranged such that a cross-sectional area of the light extraction unit (10) at the edge (2) of the light entry surface (1) is smaller than a cross-sectional area of the light extraction unit (10) at the edge (3) of the light exit surface (7).

3. The light extraction unit (10) of claim 1 or claim 2, wherein the notch area (4) is configured to receive a cover part (30), and wherein the cover part (30) is adapted such that:
an edge (34) of a cover surface (32) of the cover part (30) contacts the edge (3) between the light exit surface (7) and the notch area (4), and
the cover surface (32) extends along the light exit surface (7).

4. The light extraction unit (10) of any claims 1-3, further comprising:
a back surface (6) opposite to the light exit surface (7);
wherein at least a part of the back surface (6) comprises a reflector (8) to reflect the light towards the light exit surface (7).

5. The light extraction unit (10) of claim 4, wherein the distance between the back surface (6) and the light exit surface (7) decreases from the light entry surface (1) to the distal end of the light extraction unit (10).

6. The light extraction unit (10) of claim 4 or claim 5, wherein the back surface (6) includes a first light-guiding and light-extracting structure comprising a first plurality (20) of freeform units juxtaposed along a longitudinal direction of the light extraction unit (10).

7. The light extraction unit (10) of claim 6, wherein each (22) of the first plurality (20) of freeform units is configured to receive light at an angle of incidence equal to or larger than the corresponding critical angle for total internal reflection at the back surface (6) such that:
substantially the entire received light is totally reflected,
a predefined portion of the totally reflected light impinging under an angle of incidence smaller than the corresponding critical angle for total internal reflection at the light exit surface (7) is extracted through the light exit surface (7), and
the remaining portion of the totally reflected light impinging under an angle of incidence equal to or larger than the corresponding critical angle for total internal reflection at the light exit surface (7) is guided to another freeform unit (24) of the first plurality (20) of freeform units towards the distal end of the light extraction unit (10).

8. The light extraction unit (10) of any of claims 1-7, wherein the light exit surface (7) includes a second light-guiding and light-extracting structure comprising a second plurality of freeform units juxtaposed along a longitudinal direction of the light extraction unit (10).

9. The light extraction unit (10) of claim 8, wherein each of the second plurality of freeform units is configured to receive light at an angle of incidence smaller than the corresponding critical angle for total internal reflection at the light exit surface (7) such that:
a predefined portion of the received light is extracted through the light exit surface (7),
the remaining portion of the reflected light impinges under an angle of incidence equal to or larger than the corresponding critical angle for total internal reflection at the back surface (6) and is further guided by total internal reflection to another freeform unit of the second plurality of freeform units towards the distal end of the light extraction unit (10).

10. The light extraction unit (10) of any of claims 6-9, wherein at least one of the first (20) and second pluralities of freeform units are configured to extract light through the light exit surface (7) according to a predefined angular distribution at the light exit surface (7).

11. The light extraction unit (10) of any of claims 6-10, wherein each of the first (20) or second pluralities of freeform units is configured to extract substantially the same amount of light through the light exit surface (7), thereby causing a homogenous extraction of light along the light exit surface (7).

12. A lighting module (60), comprising:
the light extraction unit (10) of any of claims 1-11; and
a light guide unit (40) with a light entry surface (42) and a light exit surface (44), the light guide unit (40) configured to guide light received from a light source (50) at the light entry surface (42) of the light guide unit (40) to the light exit surface (44) of the light guide unit (40);
wherein the light exit surface (44) of the light guide unit (40) is coupled to the light entry surface (1) of the light extraction unit (10).

13. The lighting module (60) of claim 12, wherein the light guide unit (40) and the light source (50) are arranged such that there is no direct line of view from the position of light extraction at the light exit surface (7) of the light extraction unit (1) to the position of light entrance at the light entry surface (42) of the light guide unit (40).

14. An array (80) of lighting modules (60, 62), comprising:
a first (60) and a second (62) lighting module of claim 12 or claim 13;
wherein the notch area (4) of the first lighting module (60) is configured to receive the end section (9a) of the second lighting module (62), and wherein the end section (9a) of the second lighting module (62) is configured to cover the notch area (4) of the first lighting module (60) such that:
an edge (5a) of the light exit surface (7a) at the distal end of the light extraction unit of the second lighting module (62) contacts the edge (3) between the light exit surface (7) and the notch area (4) of the first lighting module (60), and
the light exit surface (7a) of the second lighting module (62) extends along the light exit surface (7) of the first lighting module (60).
